# EUROPEAN PATENT APPLICATION

(11) **EP 4 510 246 A1**
(43) Date of publication of application: **19.02.2025**
(21) Application number: 22939521.5
(22) Date of filing: 27.05.2022
(51) Int. Cl.: H01M 4/66, H01M 4/13, H01M 4/80, H01M 10/05

(54) **COMPOSITE CURRENT COLLECTOR AND PREPARATION METHOD THEREFOR, AND ELECTRODE PLATE AND SECONDARY BATTERY**

(30) Priority: 25.04.2022 CN 202210438744
(71) Applicant: JIANGYIN NANOPORE INNOVATIVE MATERIALS TECHNOLOGY LTD, Jiangyin City Wuxi, Jiangsu 214445 (CN)
(72) Inventor: WANG, Chenghao, Wuxi, Jiangsu 214445 (CN); LI, Xuefa, Wuxi, Jiangsu 214445 (CN); ZHANG, Guoping, Wuxi, Jiangsu 214445 (CN)
(74) Representative: Aseglio-Gianinet, Romina
(86) International application number: PCT/CN2022/095412
(87) International publication number: WO 2023/206688

(57) **Abstract**

The present invention relates to a composite current collector and a preparation method therefor, and an electrode plate and a secondary battery. The composite current collector comprises: a porous polymer film and aluminum-plated layers, which are arranged on surfaces of two sides of the porous polymer film, wherein the pore diameter D50 of the porous polymer film is less than or equal to 60 nm, and the porosity thereof is less than 80%. **In** the process of manufacturing a lithium battery, after the composite current collector is subjected to a rolling process, cases of electrode plate breakage are significantly reduced, and the unit weight of the composite current collector is reduced, thereby significantly improving the energy density of the battery.

## Description

### TECHNICAL FIELD

The present application relates to the field of batteries, and in particular to a composite current collector and a preparation method therefor, an electrode sheet, and a secondary battery.

### BACKGROUND

The positive current collector of conventional non-aqueous secondary batteries is a high-purity aluminum foil, which is made of a metal material with high density and accounts for a high proportion in non-aqueous secondary batteries, resulting in the battery having a large weight and affecting the energy density of the battery. In addition, the electrode sheet prepared from this current collector after coating is prone to breakage in the rolling process.

### SUMMARY

In view of the above, it is necessary to provide a composite current collector that can increase the energy density of the battery and reduce the breakage of the electrode sheet.

In addition, it is necessary to provide a preparation method for a composite current collector, an electrode sheet containing the composite current collector, and a secondary battery.

A composite current collector is provided, which comprises: a porous polymer film and an aluminum coating layer disposed on both sides of the porous polymer film, and the porous polymer film has a pore size D50 of ≤ 60 nm and a porosity of ≤ 80%.

In one embodiment, the porous polymer film has a pore size D50 of 20-60 nm, and a porosity of 30-60%.

In one embodiment, the porous polymer film has a thickness of 1-25 µm.

In one embodiment, the porous polymer film is selected from at least one of polyethylene and polypropylene.

In one embodiment, the aluminum coating layer on one side has a thickness of 0.3-3 µm.

A preparation method for the composite current collector is provided, which comprises the following steps:
forming an aluminum coating layer on both sides of a porous polymer film to prepare a composite current collector; wherein the porous polymer film has a pore size D50 of ≤ 60 nm and a porosity of < 80%.

In one embodiment, the aluminum coating layer is formed by vacuum evaporation or magnetron sputtering.

In one embodiment, in the process of forming the aluminum coating layer, process parameters are: an evaporation temperature of > 600°C, a vacuum degree of < 0.01 Pa, and a coating rate of > 10 m/min.

An electrode sheet is provided, which comprises: a current collector and an active material coated on both sides of the current collector, wherein the current collector is the current collector as described above or a current collector prepared by the preparation method for a composite collector as described above.

A secondary battery comprises the electrode sheet as described above.

The above composite current collector comprises a porous polymer film and an aluminum coating layer. By adopting a porous polymer film with good flexibility and low density to support the aluminum coating layer, and by controlling the pore size and porosity of the porous polymer film, the breakage of the electrode sheet is significantly reduced in the rolling process when the composite current collector is used for the production of the lithium battery, and the energy density of the battery is significantly increased.

### BRIEF DESCRIPTION OF DRAWINGS

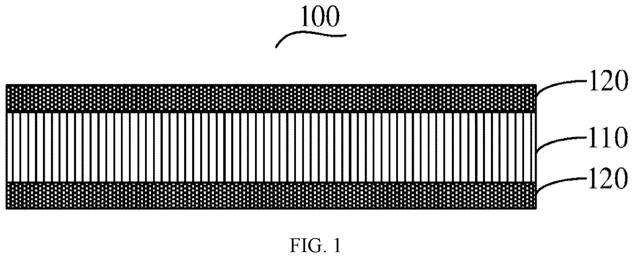

FIG. 1 is a structural schematic diagram of a composite current collector in one embodiment.

### DETAILED DESCRIPTION

In order to facilitate understanding the present application, the present application will be described more fully in terms of specific embodiments. Preferred examples of the present application are provided in the specific embodiments. However, the present application can be implemented in many different forms and is not limited to the examples described herein. The object of providing these examples is to provide a more thorough and comprehensive understanding of the disclosure of the present application.

Unless otherwise defined, all technical terms and scientific terms used herein have the same meaning as commonly understood by those skilled in the art of the present application. The terms used herein in the specification of the present application are used only for the object of describing specific examples and are not intended to limit the present application.

Referring to FIG. 1, a composite current collector 100 in one embodiment comprises: a porous polymer film 110 and an aluminum coating layer 120 disposed on both surfaces of the porous polymer film 110.

The porous polymer film 110 has a pore size D50 of ≤ 60 nm and a porosity of ≤ 80%. It has been proved by experiments that the pore size and porosity of the porous polymer film 110 within the above ranges can improve the energy density of the battery as well as reduce the breakage of the electrode sheet. If the porous polymer film 110 has too large pore size or too high porosity, the composite current collector 100 will have a reduced strength and will be prone to breakage in the process of preparing the electrode sheet.

Preferably, the porous polymer film 110 has a pore size D50 of 20-60nm and a porosity of 30-60%. For example, the pore size D50 of the porous polymer film 110 is 20 nm, 25 nm, 30 nm, 35 nm, 40 nm, 45 nm, 50 nm, 55 nm, 60 nm, 20-30 nm, 25-35 nm, 30-40 nm, 35-45 nm, 40-50 nm, 45-55 nm, or 50-60 nm, etc. The porosity of the porous polymer film 110 is 30%, 35%, 40%, 45%, 50%, 55%, 60%, 30-40%, 35-45%, 40-50%, 45-55%, or 50-60%, etc. The porous polymer film 110 with the above pore size and porosity in conjunction with the aluminum coating layer can significantly reduce the breakage of the electrode sheet during the production of the battery based on the composite current collector 100 and significantly increase the energy density at the same time.

Specifically, the porous polymer film 110 has a thickness of 1-25 µm. For example, the porous polymer film 110 has a thickness of 1 µm, 5 µm, 10 µm, 15 µm, 20 µm, 25 µm, 1-10 µm, 5-15 µm, 10-20 µm, 15-25 µm, 1-5 µm, 5-10 µm, 10-15 µm, 15-20 µm, or 20-25 µm, etc. Preferably, the porous polymer film 110 has a thickness of 2-14 µm.

Specifically, the porous polymer film 110 is selected from one of a polyethylene film, a polypropylene film, and a polyethylene/polypropylene composite film. The porous polymer film 110 with high porosity can be easily obtained from the above materials, thereby reducing costs.

In some embodiments, the porous polymer film 110 has a puncture strength of ≥ 100 gf, a tensile strength MD of ≥ 200 MPa, a tensile strength TD of ≥ 200 MPa, an elongation MD of ≥ 30%, and an elongation TD of ≥ 30%. The above porous polymer film 110 has both excellent strength and elongation, which can further improve the strength and elongation of the composite current collector 100.

A thickness of each aluminum coating layer 120 is ≤ 5 µm. Furthermore, the thickness of each aluminum coating layer 120 is independently 0.3-3 µm. For example, the thickness of each aluminum coating layer 120 is independently 0.3 µm, 0.5 µm, 1 µm, 1.5 µm, 2 µm, 2.5 µm, 0.3-0.5 µm, 0.5-1 µm, 1-1.5 µm, 1.5-2 µm, 2-2.5 µm, 2.5-3 µm, 0.3-1 µm, 0.5-1.5 µm, 1-2 µm, 1.5-2.5 µm, or 2-3 µm, etc. The above thickness of the aluminum coating layer 120 can ensure that the composite current collector 100 has a high conductivity.

Specifically, the aluminum coating layer 120 is symmetrically disposed on both surfaces of the porous polymer film 110. Furthermore, the aluminum coating layer 120 has a purity of > 99.8%.

In one embodiment, the peel force between the aluminum coating layer 120 and the porous polymer film 110 is ≥ 2 N/m.

Specifically, a thickness of the composite current collector 100 is 3-30 µm. For example, the thickness of the composite current collector 100 is 3 µm, 5 µm, 10 µm, 15 µm, 20 µm, 25 µm, 30 µm, 3-5 µm, 5-10 µm, 10-15 µm, 15-20 µm, 25-30 µm, 3-10 µm, 5-15 µm, 10-20 µm, 15-25 µm, or 20-30 µm, etc. Preferably, the composite current collector 100 has a thickness of 3-16 µm.

Furthermore, in this embodiment, the composite current collector 100 is a positive current collector.

Furthermore, in some embodiments, the composite current collector 100 is composed of a porous polymer film 110 and an aluminum coating layer 120 symmetrically disposed on both surfaces of the porous polymer film 110.

In some embodiments, the composite current collector 100 has a puncture strength of ≥ 50 gf, a tensile strength MD of ≥ 150 MPa, a tensile strength TD of ≥ 150 MPa, an elongation MD of ≥ 10%, and an elongation TD of ≥ 10%. The above composite current collector 100 has both excellent mechanical strength and elongation.

**In some** embodiments, a surface roughness Rz of the composite current collector 100 is ≤ 5.0 µm; an upper sheet resistance and a lower sheet resistance of the composite current collector 100 are both ≤ 60 mΩ.

The conventional positive current collector is an aluminum foil, and the aluminum foil is prepared by a rolling process in the following steps.
a. An electrolytic aluminum molten liquid is sent into the smelting furnace, an aluminum ingot that is 20-40% of a total weight of the electrolytic aluminum molten liquid is added, a temperature of the melt is controlled to be 750-780°C, a mass percentage of each element in the melt is adjusted to 0.1-0.15% of Si, 0.45-0.5% of Fe, 0.1-0.15% of Cu, 1.1-1.2% of Mn, and 0.02-0.04% of Ti, and the remainder is Al. A refining agent is sprayed to the melt with pure nitrogen or pure argon for refining, and the melt is stirred thoroughly and evenly, refined for a refining period of 8-10 min, then allowed to stand for 15-25 min, separated from the slag on the surface, and then poured into a holding furnace, and a temperature of the holding furnace is controlled to be 750-760°C. The aluminum liquid in the holding furnace is fed into a launder, an aluminum-titanium-boron wire is added in the reverse direction for grain refinement, and then the aluminum liquid is degassed with pure nitrogen or pure argon in a degassing box, and then the degassed aluminum liquid is filtered and purified with a foam ceramic filter. The purified aluminum liquid is sent to a casting-rolling machine for casting and rolling to obtain a blank with a thickness of 5.0-10.0 mm.
b. The blank obtained in step a is subjected to cold-rolling to a thickness of 3.0-5.0 mm, and then subjected to homogenization annealing at a homogenization annealing temperature of 440-490°C for a annealing period of 20-30 h.
c. The homogenization-annealed blank is subjected to cold-rolling to a thickness of 0.2-0.6 mm, and then subjected to recrystallization annealing at a recrystallization annealing temperature of 270-330°C for a annealing period of 12-19 h.
d. The recrystallization-annealed blank is rolled to an anode aluminum foil with a required thickness.

The aluminum foil when used as a current collector has the problems of complicated preparation process, high weight, and high hardness, so that in the production of the battery based on the current collector, the electrode sheet is easy to break, and the energy density of the prepared battery is small, thus affecting the performance of the battery. The composite current collector 100 in this embodiment comprises a porous polymer film 110 and an aluminum coating layer 120. By using a flexible porous polymer film 110 to support the aluminum coating layer 120, and by controlling the pore size and porosity of the porous polymer film 110, the breakage of the electrode sheet is significantly reduced in the rolling process when the composite current collector 110 is used for the production of the lithium battery, and the unit weight of the composite current collector 100 is reduced, which significantly improves the energy density of the battery. In addition, because the thickness of the aluminum coating layer 120 is reduced, the short-circuit area of the aluminum coating layer 120 becomes smaller in the process of puncture and squeezing on the battery, reducing the internal temperature rise of the battery, avoiding fire and explosion of the battery, and improving the safety of the battery.

The experiment proves that compared with aluminum foil with a same thickness, the area density of the above composite current collector 100 is significantly reduced, so that the energy density of the battery is significantly increased. The electrode sheet does not break in the rolling process, when the composite current collector 100 is applied to the production of the lithium battery.

In addition, limited by the process, the aluminum foil prepared by the conventional rolling process is difficult to be very thin, whereas in this embodiment, the porous polymer film 110 is combined with the aluminum coating layer 120, so that the thickness of the composite collector 100 can be thin.

A preparation method for a composite current collector in one embodiment is a preparation method for the above composite current collector, comprising the following steps:
separately forming an aluminum coating layer on both sides of the porous polymer film to prepare the composite current collector.

The porous polymer film has a pore size D50 of ≤ 60nm and a porosity of ≤ 80%. The experiment proves that the pore size and porosity of the porous polymer film within the above ranges can increase the energy density of the battery and reduce the breakage of the electrode sheet at the same time. If the porous polymer film has too large pore size or too high porosity, the strength of the composite current collector will be reduced, and the electrode sheet will be easy to break in the process of preparing electrode sheet.

Preferably, the porous polymer film has a pore size D50 of 20-60 nm and a porosity of 30-60%. For example, the porous polymer film has a pore size D50 of 20 nm, 25 nm, 30 nm, 35 nm, 40 nm, 45 nm, 50 nm, 55 nm, 60 nm, 20-30 nm, 25-35 nm, 30-40 nm, 35-45 nm, 40-50 nm, 45-55 nm, or 50-60 nm, etc.; and a porosity of 30%, 35%, 40%, 45%, 50%, 55%, 60%, 30-40%, 35-45%, 40-50%, 45-55%, 50-60%, etc.

Specifically, the porous polymer film has a thickness of 1-25 µm. For example, the porous polymer film has a thickness of 1 µm, 5 µm, 10 µm, 15 µm, 20 µm, 25 µm, 1-10 µm, 5-15 µm, 10-20 µm, 1-5 µm, 5-10 µm, 10-15 µm, 15-20 µm, or 20-25 µm, etc. Preferably, the porous polymer film has a thickness of 2-14 µm.

Specifically, the porous polymer film is selected from at least one of polyethylene and polypropylene. For example, the porous polymer film is polyethylene, polypropylene, or a polyethylene/polypropylene composite film.

In some embodiments, the porous polymer membrane has a puncture strength of ≥ 100 gf, a tensile strength MD of ≥ 200 MPa, a tensile strength TD of ≥ 200 MPa, an elongation MD of ≥ 30%, and an elongation TD of ≥ 30%. The above porous polymer film has both excellent strength and elongation, which can further improve the strength and elongation of the composite current collector.

Specifically, the aluminum coating layer is symmetrically disposed on both sides of the porous polymer film. The aluminum coating layer is formed by vacuum evaporation or magnetron sputtering. Furthermore, the aluminum coating layer is formed from a high-purity aluminum ingot (with a purity of > 99.8%) as a raw material.

In one embodiment, during the formation of the aluminum coating layer, the process parameters are as follows: an evaporation temperature of > 600°C, a vacuum degree of < 0.01 Pa, and an evaporation speed of > 10 m/min. Furthermore, the vacuum degree is 0.002-0.006 Pa, and the evaporation speed is 80-120 m/min.

Specifically, a thickness of the aluminum coating layer on one side is ≤ 5 µm. Furthermore, a thickness of the aluminum coating layer on one side is 0.3-3.0 µm. The aluminum coating layer with the above thickness ensures that the composite current collector has a high conductivity.

In one embodiment, a peel force between the aluminum coating layer and the porous polymer film is ≥ 2 N/m.

In the actual process, the porous polymer film is unwound at an unwinding tension of 5-30 N. The preparation method also comprises a winding step after forming the aluminum coating layer. Specifically, the winding is performed at a tension of 5-25 N.

A total thickness of the above composite current collector is 5-30 µm. For example, the total thickness of the composite current collector is 3 µm, 5 µm, 10 µm, 15 µm, 20 µm, 25 µm, 30 µm, 3-5 µm, 5-10 µm, 10-15 µm, 15-20 µm, 25-30 µm, 3-10 µm, 5-15 µm, 10-20 µm, 15-25 µm, or 20-30 µm, etc.

Furthermore, in this embodiment, the composite current collector is a positive current collector.

The above preparation method for the composite current collector is simple, and in the process of preparing lithium batteries based on the prepared composite current collector, the breakage of the electrode sheet in the rolling process is significantly reduced. Meanwhile, the above preparation method for the composite current collector can reduce the unit weight of the composite current collector, which significantly improves the energy density of the battery. In addition, because the thickness of the aluminum coating layer is reduced, the short-circuit area of the aluminum coating layer becomes smaller in the process of puncture and squeezing of the battery, reducing the internal temperature rise of the battery, avoiding fire and explosion of the battery, and improving the safety of the battery.

The experiment proves that, compared with the aluminum foil having a same thickness, the area density of the above composite current collector is reduced by at least 50%, and accordingly the energy density of the battery is increased by at least 15%. When the above composite current collector is applied to the production of the lithium battery, no breakage occurs on the electrode sheet in the rolling process.

An electrode sheet is provided in one embodiment, comprising: a current collector and an active substance coated on both sides of the current collector, wherein the current collector is the composite current collector in the above embodiment. Furthermore, the electrode sheet is a positive electrode sheet. The active substance may be a positive active substance commonly used in the field, and will not be repeated herein.

A secondary battery is provided in one embodiment, comprising the above electrode sheet.

Specifically, the above electrode sheet is a positive electrode sheet. The secondary battery also comprises a negative electrode sheet, a separator, and an electrolyte. The negative sheet, the separator, and the electrolyte can be commonly used in the field, and will not be repeated herein.

Specifically, the secondary battery is a non-aqueous secondary battery; for example, the secondary battery may be a lithium battery. The secondary battery in this embodiment has a high energy density, and for the preparing process, no breakage of the electrolyte sheet occurs in the rolling process. In addition, in the process of puncture and squeezing of the secondary battery, the short-circuit area of the aluminum coating layer becomes smaller, accordingly reducing the internal temperature rise of the battery, avoiding fire and explosion of the battery, and improving the safety of the battery.

The following is specific examples.

### Example 1

This example provides a composite current collector with a thickness of 8 µm, which comprises a porous polymer film PE with a thickness of 6 µm and an aluminum coating layer symmetrically disposed on both sides of the porous polymer film, and a thickness of the aluminum coating layer on one side is 1 µm. A preparation process of the composite current collector in this example is as follows.
(1) The porous polymer film PE with a thickness of 6 µm and a high-purity aluminum ingot with a purity of 99.9% were selected. The porous polymer film had a porosity of 45%, a pore size D50 of 38 nm, a tensile strength MD of 220 MPa, a tensile strength TD of 200 MPa, an elongation MD of 50%, and an elongation TD of 30%.
(2) The porous polymer film and high-purity aluminum ingot were put into a vacuum evaporation device, aluminum from the high-purity aluminum ingot was deposited onto the porous polymer film by a vacuum evaporation unit, and an aluminum layer with a thickness of 1 µm was deposited on both sides of the porous polymer film. The process parameters of the evaporation process are as follows: a unwinding tension of 8 N, a winding tension of 6 N, an evaporation temperature of 680°C, a vacuum degree of 6×10⁻² Pa, and an evaporation speed of 80 m/min.
(3) After the evaporation was completed, a winding operation was performed to obtain the composite current collector in this example.

### Example 2

This example provides a composite current collector with a thickness of 8 µm, which comprises a porous polymer film PE with a thickness of 6 µm and an aluminum coating layer symmetrically disposed on both sides of the porous polymer film, and a thickness of the aluminum coating layer on one side is 1 µm. A preparation process of the composite current collector in this example is as follows.
(1) The porous polymer film PE with a thickness of 6 µm and a high-purity aluminum ingot with a purity of 99.9% were selected. The porous polymer film had a porosity of 15% and a pore size D50 of 10 nm.
(2) The porous polymer film and high-purity aluminum ingot were put into a vacuum evaporation device, aluminum from the high-purity aluminum ingot was deposited onto the porous polymer film by a vacuum evaporation unit, and an aluminum layer with a thickness of 1 µm was deposited on both sides of the porous polymer film. The process parameters of the evaporation process are as follows: a unwinding tension of 8 N, a winding tension of 6 N, an evaporation temperature of 680°C, a vacuum degree of 6×10⁻² Pa, and an evaporation speed of 80 m/min.

(4) After the evaporation was completed, a winding operation was performed to obtain the composite current collector in this example.

### Example 3

This example provides a composite current collector with a thickness of 8 µm, which comprises a porous polymer film PE with a thickness of 2 µm and an aluminum coating layer symmetrically disposed on both sides of the porous polymer film, and a thickness of the aluminum coating layer on one side is 3 µm. A preparation process of the composite current collector in this example is as follows.
(1) The porous polymer film PE with a thickness of 2 µm and a high-purity aluminum ingot with a purity of 99.9% were selected. The porous polymer film had a porosity of 45%, a pore size D50 of 38 nm, a tensile strength MD of 220 MPa, a tensile strength TD of 200 MPa, an elongation MD of 50%, and an elongation TD of 30%.
(2) The porous polymer film and high-purity aluminum ingot were put into a vacuum evaporation device, aluminum from the high-purity aluminum ingot was deposited onto the porous polymer film by a vacuum evaporation unit, and an aluminum layer with a thickness of 1 µm was deposited on both sides of the porous polymer film. The process parameters of the evaporation process are as follows: a unwinding tension of 8 N, a winding tension of 6 N, an evaporation temperature of 680°C, a vacuum degree of 6×10⁻² Pa, and an evaporation speed of 80 m/min.
(3) After the evaporation was completed, a winding operation was performed to obtain the composite current collector in this example.

### Comparative Example 1

Comparative Example 1 provides a current collector with a thickness of 8 µm, and the current collector is an aluminum foil. The preparation process for the current collector in Comparative Example 1 is as follows.
(1) An electrolytic aluminum molten liquid was sent to a smelting furnace, aluminum ingots that was 30% of a total weight of the electrolytic aluminum molten liquid was added, the melt temperature was controlled to be 770 °C, and a mass percentage of each element in the melt was adjusted to 0.15% of Si, 0.48% of Fe, 0.13% of Cu, 1.3% of Mn, and 0.03% of Ti, and the remainder was Al; a refining agent was sprayed to the melt with pure nitrogen or pure argon for refining, and the melt is fully stirred evenly, refined for a refining period of 9 min, and then allowed to stand for 20 min, separated from the slag on the surface, and then poured into a holding furnace, and a temperature of the holding furnace was controlled to be 755°C; the aluminum liquid in the holding furnace was fed into a launder, an aluminum-titanium-boron wire was added in the reverse direction for grain refinement, then the aluminum liquid was degassed with pure nitrogen or pure argon in the degassing box, and then the degassed aluminum liquid was filtered and purified with a foam ceramic filter; the purified aluminum liquid was sent to a casting-rolling machine for casting and rolling to obtain a blank with a thickness of 4.0 mm.
(2) The blank obtained in step (1) was subjected to cold-rolling to a thickness of 4.0 mm and then subjected to homogenization annealing at a homogenization annealing temperature of 470°C for an annealing period of 25 h.
(3) The homogenization-annealed blank was subjected to cold-rolling to a thickness of 0.5 mm, and then subjected to recrystallization annealing at a recrystallization annealing temperature of 300°C for an annealing period of 15 h.
(4) The recrystallization-annealed blank was rolled to an 8 µm aluminum foil to obtain the current collector in Comparative Example 1.

### Comparative Example 2

Comparative Example 2 provides a composite current collector with a thickness of 8 µm, which comprises a porous polymer film PE with a thickness of 6 µm and an aluminum coating layer symmetrically disposed on both sides of the porous polymer film, and a thickness of the aluminum coating layer on one side is 1 µm. A preparation process of the composite current collector in Comparative Example 2 is as follows.
(1) The porous polymer film PE with a thickness of 6 µm and a high-purity aluminum ingot with a purity of 99.9% were selected. The porous polymer film had a porosity of 85% and a pore size D50 of 38 nm.
(2) The porous polymer film and high-purity aluminum ingot were put into a vacuum evaporation device, aluminum from the high-purity aluminum ingot was deposited onto the porous polymer film by a vacuum evaporation unit, and an aluminum layer with a thickness of 1 µm was deposited on both sides of the porous polymer film. The process parameters of the evaporation process are as follows: a unwinding tension of 8 N, a winding tension of 6 N, an evaporation temperature of 680°C, a vacuum degree of 6×10⁻² Pa, and an evaporation speed of 80 m/min.
(3) After the evaporation was completed, a winding operation was performed to obtain the composite current collector in Comparative Example 2.

### Comparative Example 3

Comparative Example 3 provides a composite current collector with a thickness of 8 µm, which comprises a porous polymer film PE with a thickness of 6 µm and an aluminum coating layer symmetrically disposed on both sides of the porous polymer film, and a thickness of the aluminum coating layer on one side is 1 µm. A preparation process of the composite current collector in Comparative Example 3 is as follows.
(1) The porous polymer film PE with a thickness of 6 µm and a high-purity aluminum ingot with a purity of 99.9% were selected. The porous polymer film had a porosity of 45% and a pore size D50 of 80 nm.
(2) The porous polymer film and high-purity aluminum ingot were put into a vacuum evaporation device, aluminum from the high-purity aluminum ingot was deposited onto the porous polymer film by a vacuum evaporation unit, and an aluminum layer with a thickness of 1 µm was deposited on both sides of the porous polymer film. The process parameters of the evaporation process are as follows: a unwinding tension of 8 N, a winding tension of 6 N, an evaporation temperature of 680°C, a vacuum degree of 6×10⁻² Pa, and an evaporation speed of 80 m/min.
(3) After the evaporation was completed, a winding operation was performed to obtain the composite current collector in Comparative Example 3.

### Comparative Example 4

Comparative Example 4 provides a composite current collector with a thickness of 8 µm, which comprises a non-porous polymer film PE with a thickness of 6 µm and an aluminum coating layer symmetrically disposed on both sides of the porous polymer film, and a thickness of the aluminum coating layer on one side is 1 µm. A preparation process of the composite current collector in Comparative Example 4 is as follows.
(1) The non-porous polymer film PE with a thickness of 6 µm and a high-purity aluminum ingot with a purity of 99.9% were selected.
(2) The porous polymer film and high-purity aluminum ingot were put into a vacuum evaporation device, aluminum from the high-purity aluminum ingot was deposited onto the porous polymer film by a vacuum evaporation unit, and an aluminum layer with a thickness of 1 µm was deposited on both sides of the porous polymer film. The process parameters of the evaporation process are as follows: a unwinding tension of 8 N, a winding tension of 6 N, an evaporation temperature of 680°C, a vacuum degree of 6×10⁻² Pa, and an evaporation speed of 80 m/min.
(3) After the evaporation was completed, a winding operation was performed to obtain the composite current collector in Comparative Example 4.

The composite current collectors prepared in the above Examples and Comparative Examples were tested to obtain the test data as shown in Table 1 below. The area density of the positive electrode sheet (mg/cm²) = (mass of the positive electrode sheet - mass of the positive current collector)/area of the positive electrode sheet. The composite current collector was compounded with the positive electrode active material to obtain a positive electrode sheet, and the positive electrode sheets in Examples and Comparative Examples were subjected to a rolling test by using a roller with a diameter of 250 mm, a Rockwell hardness (HRC) of 62-65, and a material of high-carbon-chromium bearing steel (SUJ2) at a rolling speed of 1 m/min and a pressure of 3000 pounds per square inch, and the interface between the current collector and the positive active material in the positive electrode sheet was observed for breakage. Energy density (Wh/kg) = energy of the battery/ mass of the whole battery.

**Table 1 Test data of Examples and Comparative Examples**

| No. | Elongation /% | Rolling Test (100000 m) | Area density (mg/cm²) | Energy Density (Wh/Kg) |
|---|---|---|---|---|
| Example 1 | 55 | No breakage of electrode sheet | 10 | 230 |
| Example 2 | 60 | No breakage of electrode sheet | 9 | 210 |
| Example 3 | 58 | No breakage of electrode sheet | 9 | 252 |
| Comparative Example 1 | 4 | Electrode sheet breaks 2 times | 21 | 200 |
| Comparative Example 2 | 5 | Electrode sheet breaks 4 times | 22 | 189 |
| Comparative Example 3 | 3 | Electrode sheet breaks 5 times | 21 | 185 |
| Comparative Example 4 | 6 | Electrode sheet breaks 6 times | 21 | 191 |

From the above test data, it can be seen that compared with aluminum foil with the same thickness, the area density of the composite current collector prepared in the Examples is reduced by at least 50%, so that the energy density of the battery is increased by at least 15%. There is no breakage of the electrode sheet in the rolling process during the production of the lithium battery.

The technical features of the above examples can be combined in any manner, and for the reason of brief description, not all possible combinations of the technical features of the above examples have been described, However, as long as there is no contradiction in the combinations of these technical features, they should be considered to be disclosed by this specification.

The above examples only express several embodiments of the present application to facilitate understanding of the technical solution of the present application specifically and completely, but they are not regarded as a limitation of the protection scope of the present application. It should be noted that those skilled in the art may make various modifications and improvements without departing from the conception of the present application. It should be understood that the technical solutions which are obtained by logical analysis, reasoning or limited experimentation of the technical solutions provided in the present application by those skilled in the art are within the protection scope of the claims of the present application. Therefore, the protection scope of the present application shall be subject to the contents of the claims, and the specification and the accompanying drawings may be used to illustrate the contents of the claims.

## Claims

1. A composite current collector, which comprises: a porous polymer film and an aluminum coating layer disposed on both sides of the porous polymer film, and the porous polymer film has a pore size D50 of ≤ 60 nm and a porosity of ≤ 80%.

2. The composite current collector according to claim 1, wherein the porous polymer film has a pore size D50 of 20-60 nm and a porosity of 30-60%.

3. The composite current collector according to claim 1, wherein the porous polymer film has a thickness of 1-25 µm.

4. The composite current collector according to claim 1, wherein the porous polymer film is polyethylene, polypropylene, or a polyethylene/polypropylene composite film.

5. The composite current collector according to any one of claims 1-4, wherein each aluminum coating layer independently has a thickness of 0.3-3 µm.

6. A preparation method for a composite current collector, which comprises the following steps:
forming an aluminum coating layer on both sides of a porous polymer film to prepare a composite current collector; wherein the porous polymer film has a pore size D50 of ≤ 60 nm and a porosity of ≤ 80%.

7. The preparation method for a composite current collector according to claim 6, wherein the aluminum coating layer is formed by vacuum evaporation or magnetron sputtering.

8. The preparation method for a composite current collector according to claim 7, wherein in the process of forming the aluminum coating layer, process parameters are: an evaporation temperature of > 600°C, a vacuum degree of ≤ 0.01 Pa, and a coating rate of > 10 m/min.

9. An electrode sheet, which comprises: a current collector and an active material coated on both sides of the current collector, wherein the current collector is the current collector according to any one of claims 1-5 or a current collector prepared by the preparation method for a composite collector according to any one of claims 6-8.

10. A secondary battery, which comprises the electrode sheet according to claim 9.
